# EUROPÄISCHE PATENTSCHRIFT

(11) **EP 1 754 654 B1**
(45) Veröffentlichungstag und Bekanntmachung des Hinweises auf die Patenterteilung: **18.11.2009**
(21) Anmeldenummer: 06016905.9
(22) Anmeldetag: 12.08.2006
(51) Int. Cl.: B62D 29/00, B62D 25/08, B62D 21/15

(54) **Flanschverbindung zur Verschraubung einer Crashbox und eines Montageträgers mit einem Fahrzeuglängsträger**
Flange joint for screwing a crash box and an assembly carrier to a vehicle chassis rail
Raccord à brides pour visser un boîtier absorbeur d'énergie et un porte-montage à un longeron de véhicule

(30) Priorität: 20.08.2005 DE 102005039467
(43) Veröffentlichungstag der Anmeldung: 21.02.2007
(73) Patentinhaber: HBPO GmbH, 59552 Lippstadt (DE); Benteler Automobiltechnik GmbH, 33102 Paderborn (DE)
(72) Erfinder: Fischer, Andreas, 35745 Herborn (DE)
(74) Vertreter: Schober, Mirko

(56) Entgegenhaltungen:
- EP-A- 1 266 818
- DE-A1- 3 921 119
- DE-A1- 19 802 152
- DE-A1- 19 854 050
- DE-U1-202004 012 982
- JP-A- 2002 012 109

## Beschreibung

Die Erfindung bezieht sich auf eine Flanschverbindung für eine mit dem Stirnende eines Fahrzeuglängträgers zu verbindende Crashbox mit einer ersten stählernen Flanschplatte an dem Längsträger und an einer zweiten stählernen Flanschplatte an an der Crashbox, die Durchgangslöcher für eine Verschraubung aufweisen, wobei zwischen den beiden Flanschplatten ein plattenförmiger Befestigungsansatz eines aus einem relativ zu Stahl weicheren Werkstoff bestehenden Montageträgers verspannbar ist, der wenigstens eine Durchgangsöffnung zur axial fluchtenden Anordnung mit zwei in der Verbindungslage miteinander korrespondierenden Durchgangslöchern der beiden Flanschplatten aufweist.

Eine solche Flanschverbindung ist aus dem Dokument EP 1 211 163 A2 bekannt. Sie werden für den Anbau eines Frontends für Personen- oder Kleinlastkraftwagen eingesetzt, um die zentrale Montageeinheit des Frontends, den Montageträger, sicher mit der Fahrzeugstruktur zu verbinden. Der Montageträger wird in einer Vormontage außerhalb des Fahrzeugs mit Bauteilen, wie Kühlkomponenten, Scheinwerfern, Stoßfängerquerträgern mit Crashelementen, einem Haubenschloß und weiteren Bauteilen versehen.

Die wichtigsten Befestigungspunkte am Fahrzeug für das Frontend sind die Schnittstellen zwischen den Frontenden der Fahrzeuglängsträger und dem Crashelement, wie der hierfür üblicherweise verwendeten Crashbox. Die Schnittstelle ist als leicht lösbare Schraubverbindung mit jeweils einer Flanschplatte am Längsträger und am Crashelement ausgeführt, und sie ermöglicht zugleich die Befestigung des Montageträgers mit seinem plattenförmigen Befestigungsansatz zwischen den beiden Flanschplatten am rückwärtigen Ende des Crashelementes sowie am Stirnende des betreffenden Fahrzeuglängsträgers.

Die Montageträger werden als Kunststoffspritzgießteile ausgeführt und weisen in bekannter Ausführung Metallverstärkungen zumindest im Bereich ihres Befestigungsansatzes auf. Dieser Befestigungsansatz wird zwischen den Flanschplatten der in Rede stehenden Flanschverbindung verspannt, deren Funktion nicht beeinträchtigt werden darf, denn es handelt sich um eine hochbelastete Sicherheitsverbindung. Deshalb sieht man als Metallverstärkungen im Bereich des Befestigungsansatzes des Montageträgers metallene Distanzhülsen vor, die entweder bereits im Spritzgießprozeß oder im nachhinein in das Kunststoffmaterial des Montageträgers eingebracht werden. Die Distanzhülsen sind so angeordnet, daß durch sie die Schraubbolzen der Schraubverbindung zwischen den Flanschplatten hindurchtreten. So besteht nach dem Verspannen der beiden Flanschplatten gegeneinander mit dem dazwischen eingefügten Befestigungsansatz des Montageträgers eine durchgängige Metallverbindung zwischen der Crashbox und dem Stirnende des betreffenden Fahrzeuglängsträgers, über die im Crashfall ausreichend hohe Stoßkräfte sicher übertragen werden können.

Problematisch bei derartigen bekannten Flanschverbindungen ist die exakte Anordnung der metallenen Distanzhülsen im Kunststoffmaterial des Befestigungsansatzes des Montageträgers, denn jedes Kunststoffmaterial hat Fließeigenschaften, die für eine exakte Positionierung der metallenen Distanzhülsen nachteilig sind. Zudem handelt es sich bei diesen Distanzhülsen um separat zu fertigende und zu bevorratende Teile, deren Plazierung in der Spritzgußform oder deren nachträgliche Anbringung besondere Aufmerksamkeit erfordert. Dies gilt auch hinsichtlich der Abstimmung der axialen Längen der Distanzhülsen und der Dicke des Befestigungsansatzes am Montageträger.

Der Erfindung liegt die Aufgabe zugrunde, eine Flanschverbindung der eingangs genannten Art zu schaffen, bei der die Ausbildung und Anordnung der zwischen den Flanschplatten der Flanschverbindung notwendigen Distanzelemente nicht vom Fertigungsprozeß des Montageträgers abhängig ist.

Diese Aufgabe wird bei einer Flanschverbindung der vorgenannten Art dadurch gelöst, daß der Rand des Durchgangslochs der Flanschplatte der Crashbox, welches in die axiale Flucht mit der Durchgangsöffnung im Befestigungsansatz des Montageträgers zu bringen ist, zu einem an der von der Crashbox abgewandten Seite vorstehenden Kragen umgeformt ist, an dessen Durchtritt die Durchgangsöffnung des Montageträgers angepaßt ist und der stirnseitig auf dem Randbereich des betreffenden Durchgangslochs der Flanschplatte des Längsträgers aufsetzbar ist und dessen Überstand der Dicke des plattenförmigen Befestigungsansatzes am Montageträger vermindert um einen zu dessen Klemmung erforderlichen Bruchteil entspricht.

Für die Erfindung ist wesentlich, daß die Distanzelemente fest an der Flanschplatte der Crashbox angeordnet sind und somit das Abstandsmaß zwischen den Flanschplatten der Flanschverbindung nicht von einem zwischen die Flanschplatten einzufügenden Bauteil abhängig ist. Das Maß des Abstandes zwischen den miteinander verspannten Flanschplatten kann unmittelbar an der Flanschplatte der Crashbox kontrolliert werden. Außerdem erleichtern die an der Flanschplatte der Crashbox vorstehenden Kragen das Zusammenfügen der Crashboxen und der damit zusammenhängenden Teile mit dem Montageträger mittels einer Hilfsverschraubung, die für den Transport des Frontends von seinem Vormontageort zur Bandmontage des Fahrzeugs vorgesehen wird. Des weiteren kann sich bei der Anbringung des Frontends bei der Verschraubung der Flanschplatten an den Crashboxen und den Flanschplatten an den Frontenden der Fahrzeuglängsträger unter Zwischenfügung der Befestigungsansätze des Montageträgers nicht durch die Verspannung verdrängter Kunststoff des Befestigungsansatzes zwischen die Stirnseiten der Distanzelemente und ihren Anlageflächen drängen, denn es kann ein genügender Abstand zwischen den Lochlaibungen der Durchgangsöffnungen am Befestigungsansatz des Montageträgers und dem Außenumfang der Kragen an den Flanschplatten der Crashboxen vorgesehen werden, was bei Einbettung von Distanzhülsen in das Kunststoffmaterial nicht möglich ist.

Grundsätzlich können die Distanzelemente statt an den Flanschplatten der Crashboxen an den Flanschplatten an den Frontenden der Fahrzeuglängsträger angeordnet sein, der gewünschte Stützeffekt beim Verspannen der Flanschplatten gegeneinander tritt dann in gleicher Weise ein. Da die Fahrzeuglängsträger keine Anbauteile an der Karosseriestruktur darstellen sondern deren tragende Elemente sind, werden die Distanzelemente bevorzugt an den Flanschplatten der Crashboxen vorgesehen, die mit dem Montageträger zusammen mit der Karosseriestruktur verbunden werden.

Für eine sichere Klemmung können an den Befestigungsansätzen des Montageträgers ein- oder beidseitig Strukturen miteinander benachbarten Bergen und Tälern vorgesehen werden, wofür eine geeignete Verrippung in Betracht kommen kann. Hierdurch kann das elastische Verhalten des Kunststoffs im Bereich des Befestigungsansatzes des Montageträgers zwischen den Flanschplatten der Crashboxen und der fahrzeugseitigen Längsträger verbessert werden. Man erzielt dadurch einen genaueren Anpreßdruck und man kann des weiteren die zulässigen Toleranzmaße für das Fügen des Befestigungsansatzes zwischen den Flanschplatten erhöhen.

Die Erfindung wird nachfolgend anhand der Zeichnung an einem Ausführungsbeispiel noch näher erläutert. Dabei zeigen:
- Fig. 1: eine perspektivische Darstellung einer Flanschverbindung zwischen einer Crashbox und einem Fahrzeuglängsträger mit zwischengefügtem Befestigungsansatz eines Montageträgers,
- Fig. 2: einen Längsschnitt durch die Flanschverbindung nach Fig. 1 im Bereich einer der Verschraubungen und
- Fig. 3: eine Einzelheit der Flanschverbindung mit Darstellung der Verschraubung von Fig. 2 in vergrößerter Wiedergabe.

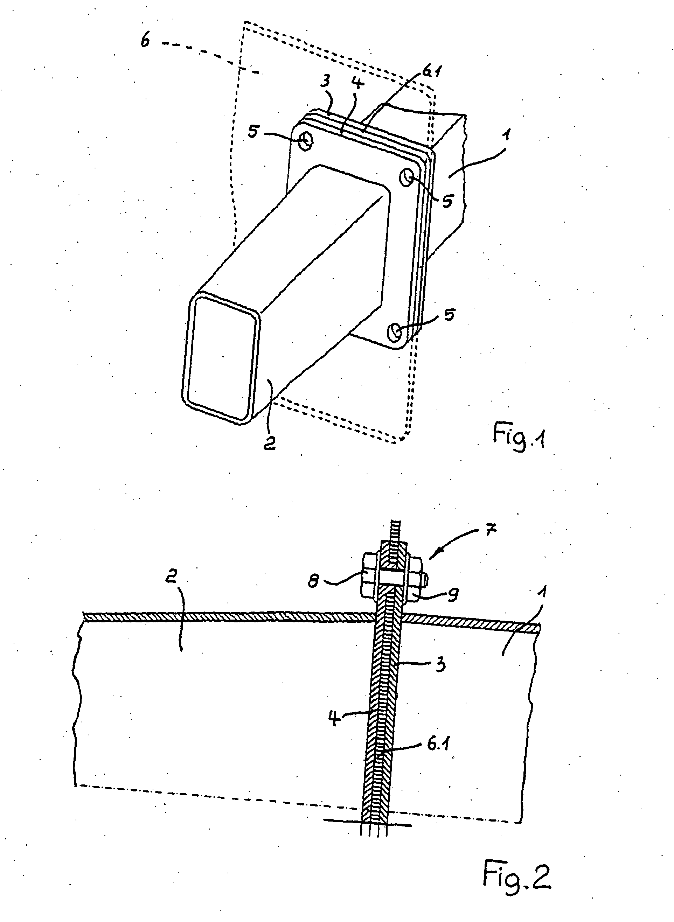

Im einzelnen zeigt Fig. 1 das frontseitige Ende eines Längsträgers 1 der Karosseriestruktur eines Personen- oder Kleinlastkraftwagens. Mit dem Stirnende des Längsträgers 1 wird eine Crashbox 2 verschraubt, die sich mit ihrer Längsrichtung in der Längsrichtung des Längsträgers 1 erstreckt. Dazu dient eine Flanschverbindung mit einer ersten Flanschplatte 3 am vorderen Stirnende des Längsträgers 1 und einer zweiten Flanschplatte 4 am rückwärtigen Ende der Crashbox 2. Für die Verschraubung sind in den beiden Flanschplatten 3, 4 Durchgangslöcher 5 vorgesehen, die bei beiden Flanschplatten 3, 4 mit gleichem Lochbild angeordnet sind. Mit der Verschraubung der beiden Flanschplatten 3, 4 wird zugleich ein Montageträger 6 an dem Längsträger 1 befestigt, dazu wird er mit einem plattenförmigen Befestigungsansatz 6.1 zwischen den beiden Flanschplatten 3, 4 verspannt.

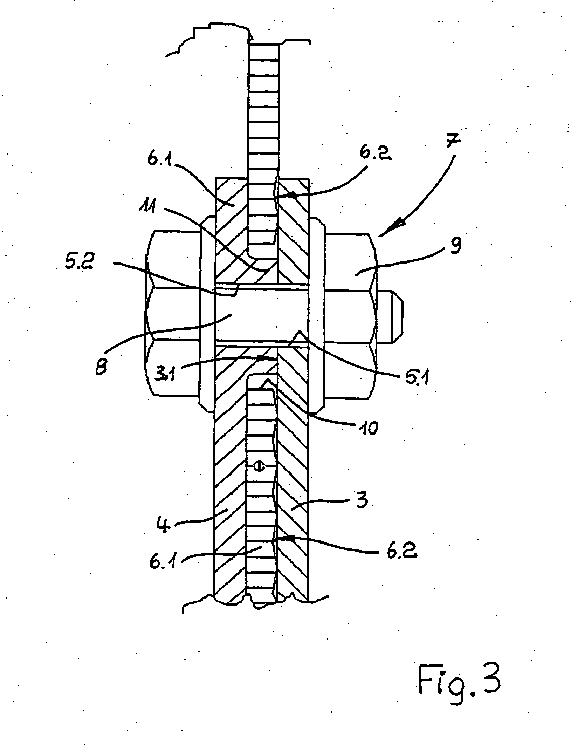

Die Figuren 2 und 3 zeigen Einzelheiten jeder der Verschraubung 7 im Bereich der in Fig. 1 gezeigten Durchgangslöcher 5, von denen in Fig. 3 das der Flanschplatte 3 am Längsträger 1 mit 5.1 und das der Flanschplatte 4 der Crashbox mit 5.2 bezeichnet ist. Die Verschraubung 7 besteht aus einem Schraubbolzen 8 und einer darauf aufgesetzten Mutter 9, welche die voneinander abliegenden Außenseiten der beiden Flanschplatten 3, 4 beaufschlagen.

Das Durchgangsloch 5.2 in der Flanschplatte 4 der Crashbox 2 ist derart in das Material der Flanschplatte 4 eingearbeitet, daß durch Umformung des Lochrandes ein Kragen 11 gebildet ist, der an der von der Crashbox 2 abgewandten Seite der Flanschplatte 4 in koaxialer Richtung vorsteht. In zusammengefügter Anordnung sitzt dieser Kragen 11 mit seiner ringförmigen Stirnseite auf dem das Durchgangsloch 5.1 der Flanschplatte 3 am Längsträger 1 umgebenden Randbereich 3.1 auf. So besteht über die Verschraubung 7 eine feste metallische Verbindung zwischen den miteinander verspannten Flanschplatten 3 und 4.

Die Länge des axialen Überstandes des Kragens 11 am Durchgangsloch 5.2 der Flanschplatte 4 ist etwas geringer als die Dicke des Befestigungsansatzes 6.1 am Montageträger 6. Dadurch kann der Befestigungsansatz 6.1 zwischen den beiden Flanschplatten 3.4 reibschlüssig verspannt werden, wobei sich der aus einem Kunststoff oder einem Metall-Kunststoff-Verbund bestehende Befestigungsansatz 6.1 verformt. Mit Rücksicht auf eine bleibende Klemmkraft wird eine möglichst elastische Verformung des Befestigungsansatzes 6.1 angestrebt. Hierzu ist an zumindest einer Seite des Befestigungsansatzes 6.1 eine Struktur mit einander benachbarten Bergen und Tälern vorgesehen, die in praktischer Ausführung als Verrippung ausgebildet ist.

Für den Durchtritt des Kragens 11 an der der Flanschplatte 3 am Längsträger 1 zuzukehrenden Seite der Flanschplatte 4 der Crashbox 2 weist der Befestigungsansatz 6.1 des Montageträgers 6 eine Durchgangsöffnung 10 auf, deren Durchmesser größer als der Außendurchmesser des Kragens 11 ist. Das hierdurch bestehende Spiel erleichtert bei der Montage die Ausrichtung des Montageträgers 6, außerdem kann das Material des Befestigungsansatzes 6 beim Verspannen der beiden Flanschplatten 3, 4 miteinander nicht bis zu der auf dem Randbereich 3 der Flanschplatte 3 aufzusetzenden Stirnfläche des Kragens 11 vordringen.

## Patentansprüche

1. Flanschverbindung zwischen dem Stirnende eines Fahrzeuglängsträgers (1) und einer mit dieser zu verbindenden Crashbox (2), wobei am Fahrzeuglängsträger (1) eine erste stählerne Flanschplatte (3) und an der Crashbox (2) eine zweite stählerne Flanschplatte (4) angeordnet ist, die beide Durchgangslöcher (5) für eine Verschraubung (7) aufweisen, wobei ferner zwischen den beiden Flanschplatten (3, 4) ein plattenförmiger Befestigungsansatz (6.1) eines aus einem relativ zu Stahl weicheren Werkstoff bestehenden Montageträgers (6) verspannt ist, der wenigstens eine Durchgangsöffnung (10) zur axial fluchtenden Anordnung mit zwei in der Verbindungslage miteinander korrespondierenden Durchgangslöchern (5.1, 5.2) der beiden Flanschplatten (3, 4) aufweist,
**dadurch gekennzeichnet,**
**daß** der Rand des Durchgangslochs (5.2) der Flanschplatte (4) der Crashbox (2), welches in die axiale Flucht mit der Durchgangsöffnung (10) im Befestigungsansatz (6.1) des Montageträgers (6) zu bringen ist, zu einem an der von der Crashbox (2) abgewandten Seite vorstehenden Kragen (11) umgeformt ist, an dessen Durchtritt die Durchgangsöffnung (10) des Montageträgers (6) angepaßt ist und der stirnseitig auf dem Randbereich des betreffenden Durchgangslochs (5.1) der Flanschplatte (3) des Längsträgers (1) aufsetzbar ist und dessen Überstand der Dicke des plattenförmigen Befestigungsansatzes (6.1) am Montageträger (6) vermindert um einen zu dessen Klemmung erforderlichen Bruchteil entspricht.

2. Flanschverbindung nach Anspruch 1,
**dadurch gekennzeichnet,**
**daß** der plattenförmige Befestigungsansatz (6.1) am Montageträger (6) an zumindest einer Seite eine Struktur (6.2) mit einander benachbarten Bergen und Tälern aufweist.

3. Flanschverbindung nach Anspruch 1 oder 2,
**dadurch gekennzeichnet,**
**daß** der Durchmesser der Durchgangsöffnung (10) im Befestigungsansatz (6.1) des Montageträgers (6) größer als der Außenumfang des Kragens (11) an der Flanschplatte (4) der Crashbox (2) ist.

## Claims

1. Flange connection between the end of the vehicle longitudinal beam (1) and a crash box (2) which is to be connected to same, wherein a first steel flange plate (3) is mounted on the vehicle longitudinal beam (1) and a second steel flange plate (4) is mounted on the crash box (2) and both have through holes (5) for screw connection (7), wherein furthermore a plate-type fastening attachment (6.1) of a mounting support (6) made of a softer material in relation to steel is clamped between the two flange plates (3, 4), the fastening attachment having at least one through opening (10) for axially aligned arrangement with the two through holes (5.1, 5.2) of the two flange plates (3 ; 4) which are to correspond with one another in the connected state, **characterised in that** the edge of the through hole (5.2) of the flange plate (4) of the crash box (2) which is to be brought into axial alignment with the through opening (10) in the fastening attachment (6.1) of the mounting support (6) is shaped round into a collar (11) protruding on the side remote from the crash box (2), the through opening (10) of the mounting support (6) is adapted to the through passage of the collar and the collar can be fitted at its side end onto the edge area of the relevant through hole (5.1) of the flange plate (3) of the longitudinal beam (1) and its overhang corresponds to the thickness of the plate-type fastening attachment (6.1) on the mounting support (6) reduced by a fraction required for its clamping fit.

2. Flange connection according to claim 1 **characterised in that** the plate-type fastening attachment (6.1) on the mounting support (6) has on at least one side a structure (6.2) with mutually adjoining peaks and troughs.

3. Flange connection according to claim 1 or 2 **characterised in that** the diameter of the through opening (10) in the fastening attachment (6.1) of the mounting support (6) is greater than the external circumference of the collar (11) on the flange plate (4) of the crash box (2).

## Revendications

1. Raccord à brides entre l'extrémité frontale d'un longeron de véhicule automobile (1) et un boîtier absorbeur d'énergie (2) devant être relié à celle-ci, une première bride en forme de plaque (3), en acier étant associée au longeron de véhicule automobile (1) et une deuxième bride en forme de plaque (4), en acier étant associée au boîtier absorbeur d'énergie (2), ce en plus de quoi, entre les deux brides en forme de plaques (3, 4) est serré un appendice de fixation, en forme de plaque (6.1), d'un support de montage (6), qui, consistant en un matériau relativement plus tendre que l'acier, présente au moins une ouverture de passage (10) pour l'agencement en alignement axial avec deux trous de passage (5.1, 5.2) des deux brides en forme de plaques (3, 4), qui correspondent l'un à l'autre dans la position de raccordement,
**caractérisé en ce que**
le bord du trou de passage (5.2) de la bride en forme de plaque (4) du boîtier absorbeur d'énergie (2), qui doit être amené en alignement axial avec l'ouverture de passage (10), prévue dans l'appendice de fixation (6.1) du support de montage (6), est déformé en une collerette (11) faisant saillie sur le côté opposé au boîtier absorbeur d'énergie (2), au passage de laquelle est adaptée l'ouverture de passage (10) du support de montage (6), et qui peut venir en appui, frontalement, sur la région marginale du trou de passage (5.1) de la première bride en forme de plaque (3) du longeron de véhicule automobile (1), et dont la saillie correspond à l'épaisseur de l'appendice de fixation (6.1) en forme de plaque sur l'axe central longitudinal (8), déduction faite d'une fraction nécessaire à son serrage.

2. Raccord à brides selon la revendication 1,
caratérisé en ce que
l'appendice de fixation (6.1) sur le support de montage (6) présente, au moins sur un côté, une structure (6.2) comprenant des évidements et des saillies voisines les uns des autres..

3. Raccord à brides selon revendication 1 ou 2,
**caractérisé en ce que**
le diamètre de l'ouverture de passage (10) dans l'appendice de fixation (6.1) du support de montage (6) est plus grand que le pourtour extérieur de la collerette (11) sur la deuxième bride en forme de plaque (4) du boîtier absorbeur d'énergie (2).
